# EUROPÄISCHE PATENTSCHRIFT

(11) **EP 0 332 177 B1**
(45) Veröffentlichungstag und Bekanntmachung des Hinweises auf die Patenterteilung: **08.06.1994**
(21) Anmeldenummer: 89104126.1
(22) Anmeldetag: 08.03.1989
(51) Int. Cl.: G02B 1/10, G02B 5/26

(54) **Niederreflektierender, hochtransparenter in Durch- als auch in Aussenansicht neutral wirkender Sonnenschutz- und/oder wärmedämmender Belag für ein Substrat aus transparentem Material**
Low reflexion highly transparent neutral sun protection coating, for through as well as exterior viewing, and/or a heat rejection coating, both for a transparent substrate
Revêtement protecteur à l'égard des rayons du soleil et/ou atténuateur du rayonnement thermique ayant un faible pouvoir réflecteur, une transparence élevée et une apparence neutre tant en transparence que du point de vue aspect extérieur

(30) Priorität: 08.03.1988 DE 3807600
(43) Veröffentlichungstag der Anmeldung: 13.09.1989
(73) Patentinhaber: INTERPANE Entwicklungs- und Beratungsgesellschaft mbH & Co. KG, D-37697 Lauenförde (DE)
(72) Erfinder: Volz, Hans, Dr., D-3526 Trendelburg 6 (DE)
(74) Vertreter: Melzer, Wolfgang, Dipl.-Ing.

(56) Entgegenhaltungen:
- EP-A- 0 007 224
- EP-A- 0 076 975
- EP-A- 0 090 403

## Beschreibung

Die Erfindung betrifft einen niederreflektierenden, hochtransparenten in Durch- als auch in Außenansicht neutral wirkenden Sonnenschutz- und/oder wärmedämmenden Belag für ein Substrat aus transparentem Material, insbesondere für Isolierverglasungen gemäß dem Oberbegriff des Anspruchs 1 sowie Verfahren zur Herstellung solcher Beläge.

Bei den oben aufgeführten Belägen handelt es sich um ein dünnes Mehrschichtensystem mit dem Aufbau Metallverbindung-Metall-Metallverbindung, wobei insbesondere Edelmetalle wie Silber oder Gold bzw. transparente Metalloxide, -sulfide, -nitride und -hologenide üblich sind. Insbesondere wird eine Schichtenfolge aus Wismutoxid-Silber-Wismutoxid verwendet, wobei das Wismutoxid durch bestimmte unedlere Stoffe, insbesondere Mangan, dotierbar ist. Da diese unedleren Stoffe ein höheres Normalpotential als Wismutoxid aufweisen, wird eine Schwärzung der Schichten bei UV-Bestrahlung vermieden. Ein derartiges Schichtensystem bildet einen ausgezeichneten wärmedämmenden Belag für ein Substrat aus transparentem Material (vgl. z.B. europäische Patentanmeldung EP-A-0 076 975) entsprechend dem Oberbegriff des Anspruchs 1. Wesentlich bei solchen Mehrschichtensystemen ist einerseits, daß das Aufbringen einer Schicht auf einer anderen, deren optische Eigenschaften nicht verändert, daß hierdurch aber die optischen Eigenschaften des Gesamtsystems verändert werden.

Der oben erwähnte Belag zeichnet sich neben der Wärmedämmwirkung für schwarze Strahler durch hohe Transparenz für Sonnenstrahlen aus.

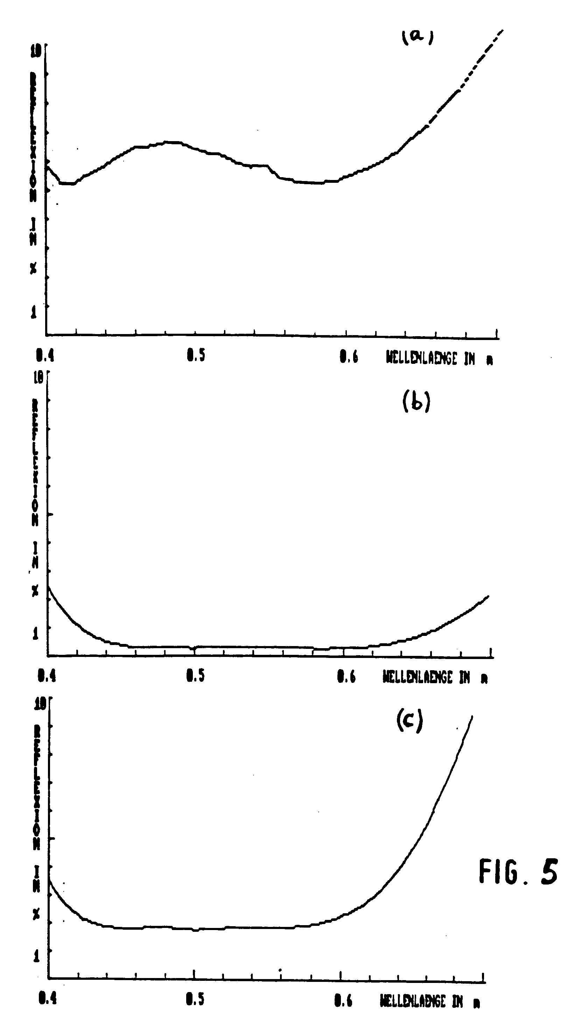

Die bekannten Wärmeschutzscheiben weisen jedoch große Reflexionsschwankungen im sichtbaren Wellenlängenbereich auf, die die Scheibe farbig erscheinen lassen, was unerwünscht ist. Der Eneriedurchgang der Sonnenstrahlen im nahen Infrarot(IR)-Wellenlängenbereich erreicht nur durchschnittliche Werte, da ein verhältnismäßig hoher Reflexionsanteil der Scheibe vorliegt. Ferner zeigen die bekannten Sonnenschutzscheiben einen relativ hohen Energiedurchgang für Sonnenwärme, insbesondere im sichtbaren Wellenlängenbereich. Erwünscht ist also hohe Farbneutralität. Farbneutralität läßt sich erreichen, wenn eine konstante Mischung der Farbkomponenten (blau, grün, rot) gewährleistet ist. Dies ist nur durch Verfahren erreichbar, die keine Toleranzen zulassen. Die Reflexionskurve eines solchen Sonnenschutz-Belages weist nämlich einen typischen W-Verlauf (vgl. Fig. 5a) mit einem Maximum bei ca. 480 nm auf. Ferner ist der Verlauf des letzten Astes des W-Verlaufes für den Sonnenenergiedurchgang maßgebend. Dieser W-Verlauf beeinträchtigt jedoch die Farbneutralität. Wäre andererseits der Kurvenverlauf über den sichtbaren Wellenlängenbereich konstant, dann ließe sich die erwünschte Farbneutralität (selbst bei zugelassenen Toleranzen beim Herstellverfahren) erreichen.

Es ist daher Aufgabe der Erfindungen, diesen Belag der eingangs genannten Art sowie Verfahen zu seiner Herstellung anzugeben, der kein solches Maximum in seinem Verlauf aufweist. D.h., es sollen also ein wärmedämmender Belag für ein Substrat aus transparentem Material zur Verfügung gestellt werden, bei dem der Energiedurchgang im Infrarot-Wellenlängenbereich möglichst hoch ist, die Reflexion im sichtbaren Wellenlängenbereich nahezu konstant gehalten und der Reflexionswert gesenkt ist und/oder einen Sonnenschutz-Belag für ein Substrat aus transparentem Material zur Verfügung getellt werden, bei dem die Reflexion im (nahen) IR-Wellenlängenbereich möglichst hoch und im sichtbaren Bereich nahezu konstant gehalten ist, sowie Verfahren zur Herstellung solcher Beläge angegeben werden.

Die Aufgabe wird durch die kennzeichnenden Merkmale des Anspruchs 1 oder 10 gelöst.

Die Erfindung wird durch die Merkmale der Unteransprüche weitergebildet.

Bei der ersten Lösung wird von der Erkenntnis ausgegangen, daß ein Stoff mit einem bestimmten Brechungsindex erreicht, daß die beiden Minima des W-Verlaufs in ein einziges Minimum (ein Doppelminimum) übergehen. Ein solcher Stoff (der auch andere hier nicht betrachtete Bedingungen erfüllen muß, damit er für gattungsgemäße Beläge verwendbar ist) ist noch nicht entdeckt worden. Gemäß der Erfindung ist dessen Brechungsindex dadurch annäherbar, daß bei einem Dreischichtensystem die Metallverbindungen (insbesondere die Metalloxide) mit unterschiedlichen Brechungsindizes gewählt werden (wobei die Metallschicht den niedrigsten Brechungsindex besitzt). Die jeweilige Verwendung der Metallverbindungen ist dabei wegen der Umkehrbarkeit der Strahlenoptik mit Schichtdickenänderungen vertauschbar.

Bei der zweiten Lösung wird von der Erkenntnis ausgegangen, daß (z.B.) ein Fünfschichtensystem im Kurvenverlauf mit 2 Maximas und 3 Minimas besitzt, wobei der Hub zwischen Minimas und Maximas deutlich niedriger ist, usw. Durch eine solche Mehrfach-W-Struktur läßt sich der erwünschte konstante Verlauf also ebenfalls annähern.

Beide Lösungen unterscheiden sich lediglich in ihrem Verhalten im nahen Infrarot. Im ersteren Fall steigt der letzte Ast des W-Verlaufes nur allmählich, weshalb ein solcher Belag für Wärmeschutzzwecke besonders geeignet ist, da er die Sonnenenergie nahezu vollständig hindurchläßt, die Strahlung des schwarzen Körpers (z.B. Zimmerwärme) im fernen Infrarot wegen der Metallschicht zu etwa 91-94 % (bei Silber und einer Schichtdicke von 11 nm) reflektiert. Bei einer Isolierverglasung wird daher ein solcher Belag auf der nach außen weisenden Seite der innenliegenden Scheibe (aus Glas oder Kunststoff) vorgesehen. Im anderen Fall steigt der letzte Ast des W-Verlaufs nicht nur steil an, sondern ist auch die Transmission nicht so hoch wegen der größeren Gesamtdicke der Metallschicht aus insbesondere Ag, das aber auch ganz oder teilweise durch Ni, Cr, Al, Ti, Ta, Pd, Au ersetzbar ist. Als Sonnenschutzbelag wird dieser Belag bei einer Isolierverglasung daher zweckmäßig auf der nach innen weisenden Seite der außenliegenden Scheibe vorgesehen. Dieser Belag hat aber auch Wärmeschutzfunktion und kann daher auch auf der nach außen weisenden Seite der innenliegenden Scheibe für Sonnen- und Wärmeschutzzwecke vorgesehen sein. Ein solcher Belag läßt nur noch wenig Sonnenenergie in den Raum und keine Raumwärme hinaus. Die Infrarot-Reflexion ist > 94 % (bei einer Silber-Gesamtdicke von > 14 nm).

Von weiterem Vorteil ist es, einen hochleitenden transparenten Werkstoff als Deckschicht des Belages zu verwenden und diesen mit der ein anderes Redoxpotential besitzenden Metallschicht elektrisch kurzuschließen. Eine Elektrokorrosion findet nicht mehr statt. Korrosion durch Luftfeuchte und Kondenzwasser ist vermieden.

Ein weiterer Vorteil des Metallverbindung-Metall-Metallverbindung-Mehrschichtensystems ist, daß die einzelnen Schichten durch konventionelle Beschichtungsverfahren, wie Dioden-Kathoden-Zerstäubung aufbringbar sind. Insbesondere dieses Verfahren ist sehr wirtschaftlich. Weiterhin kann mit diesem Verfahren eine hohe Farbneutralität der Sonnen- und/oder Wärmeschutzscheibe erreicht werden.

Bei der Herstellung des wärmedämmenden Belages gemäß der ersten Ausführungsform der Erfindung wird zunächst unmittelbar auf das transparente Substrat, z.B. eine Glas- oder Kunststoffscheibe, eine hochbrechende Wismutoxidschicht (z.B. n = 2,35) aufgebracht. Darüber wird eine niederbrechende Silberschicht mit (z.B. n = 0,04) vorgegebener Dicke gelegt, die wiederum mit einer einen höheren Brechungsindex aufweisenden (vorzugsweise) elektrisch leitenden Zinn-Indium-Oxid-Schicht (z.B. n = 1,3) abgedeckt wird. Wegen des extrem flachen Reflexionskurvenverlaufes des erfindungsgemäßen wärmedämmenden Belages ist der Energiedurchgang der Scheibe für Sonnenenergie erheblich verbessert. Aufgrund der nun mehr als dreiprozentigen Absenkung des Reflexionsanteils ist bei gleichbleibender Absorption der Schichten eine um diesen Anteil erhöhte Transmission vorhanden. Weiterhin wurde durch die erfindungsgemäße Ausgestaltung des Belages eine nahezu vollständige Entspiegelung der Oberfläche der Scheibe erreicht. Ferner werden der Verlauf der Äste der erfindungsgemäßen wärmedämmenden Schicht gestaltet und somit in Verbindung mit den oben erwähnten Vorteilen eine höhere Produktionsstabilität und höhere Korrosionsbeständigkeit erreicht.

Bei der Herstellung des Sonnenschutzbelages gemäß der zweiten Ausführungsform der Erfindung wird (insbesondere) durch mehrfaches Aufsputtern der Metallschicht die Reflexion im sichtbaren Wellenlängenbereich nahezu konstant gehalten und die Äste steiler gestaltet. Auch hier wird durch die "Farboptimierung" des Mehrschichtensystems eine höhere Produktionsstabilität erreicht.

Als Substrate für den erfindunsgemäßen wärmedämmenden und/oder Sonnenschutz-Belag kommen nicht nur Scheiben aus Glas in Betracht, sondern auch aus transparentem Kunststoff, aber auch transparenten Kunststoffolien. Derartige Kunststoffolien können, mit dem wärmedämmenden und/oder Sonnenschutz-Belag versehen, im Zwischenraum einer Isolierverglasung aufgeklebt oder aufgespannt sein. Sowohl der wärmedämmende als auch der Sonnenschutz-Belag führt in beiden Fällen zu einer Verbesserung der Wärmedämmung bzw. des Sonnenschutzes einer solchen Isolierverglasung.

Im folgenden wird die Erfindung anhand der in den Figuren dargestellten Ausführungsbeispiele beschrieben und näher erläutert.

Es zeigen:
- Fig. 1: schematisch einen Querschnitt durch eine Glasscheibe mit dem erfindungsgemäßen wärmedämmenden Belag,
- Fig. 2: schematisch einen Querschnitt durch eine Glasscheibe mit dem erfindungsgemäßen Sonnenschutz-Belag,
- Fig. 3: eine Isolierverglasung mit einer den Wärmedämm- oder Sonnenschutz-Belag tragende Scheibe,
- Fig. 4: eine Isolierverglasung mit einer den Wärmedämm- oder Sonnenschutz-Belag tragenden Kunststoffolie, die zwischen den Scheiben aufgespannt ist,
- Fig. 5: eine schematische Darstellung des Verlaufs der Reflexion in Abhängigkeit von der Wellenlänge eines Standard- (a), eines erfindungsgemäßen Wärmeschutz- (b) und eines erfindungsgemäßen Sonnenschutzbelages (c).

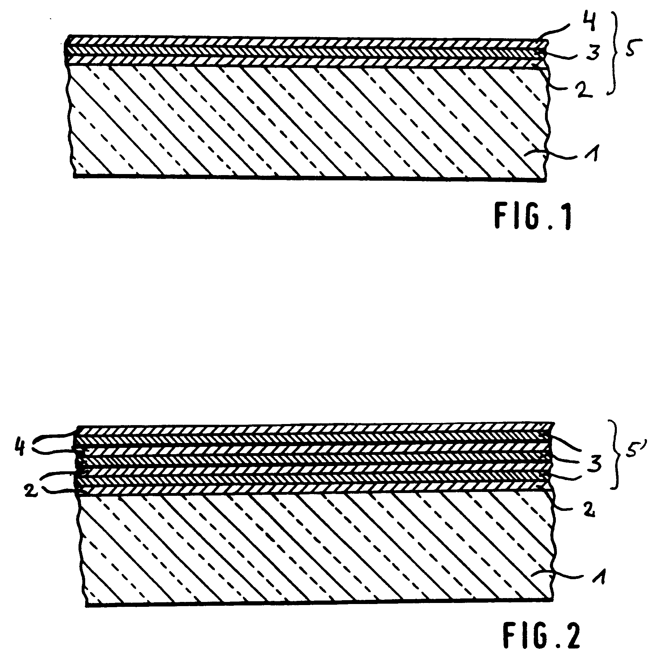

Figur 1 zeigt einen schematischen Querschnitt durch eine Glasscheibe, auf der der erfindungsgemäße, niederreflektierende und hochtransparente, in Durch- sowie in Außenansicht farbneutral wirkende wärmedämmende Belag 5 gemäß der einen Ausführungsform der Erfindung aufgebracht ist. Unmittelbar auf dem durch die Glasscheibe gebildeten transparentem Substrat 1 befindet sich eine diesem zugewandte erste, hochbrechende Metalloxidschicht 2. Diese Schicht 2 hat eine Dicke von etwa 31 nm. Auf diese Schicht 2 folgt eine zweite, niederbrechende Metallschicht 3 aus insbesondere Silber, die eine vorgegebene Dicke von etwa 10 nm aufweist. Darüber ist eine dritte, dem Substrat abgewandte Metalloxidschicht 4 aus einem höherbrechenden Metalloxid mit einer Dicke von etwa 50 nm gelegt. Durch den Einsatz eines niederbrechenden Metalloxid-Materials wird die Reflexion im sichtbaren Wellenlängenbereich bei vorgegebener Metallschicht-Dicke nahezu konstant gehalten, während der Energiedurchgang im Infrarot(IR)-Wellenlängenbereich hoch ist.

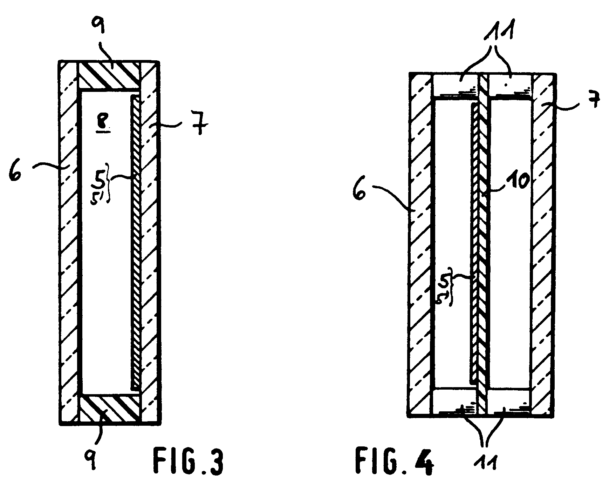

Die IR-Reflexion dieses Mehrschichten-Belages 5 liegt bei einer fest vorgegebenen Metallschicht-Dicke von 10 nm bei etwa 91 %. Wie aus Fig. 5 (b) hervorgeht, hat der Belag 5 einen Reflexionswert im sichtbaren Wellenlängenbereich, der bei < 1/2 % liegt. Ist der wärmedämmende Belag 5 auf einer der beiden Scheiben einer Isolierverglasung (s. auch Fig. 3) angeordnet, so ist das Verhältnis der Reflexion der belaglosen Scheibe 6 zur Reflexion der den Belag 5 aufweisenden Scheibe 7 in diesem Falle 16 : 1. Die belaglose Scheibe 6 in Reflexion wird somit im sichtbaren Bereich dominant.

Figur 2 zeigt einen schematischen Querschnitt durch eine Glasscheibe, auf der der erfindungsgemäße, hochtransparente, in Durch- sowie in Außenansicht farbneutral wirkende Sonnenschutzbelag 5′ gemäß der zweiten Ausführungsform der Erfindung aufgebracht ist.

Auf dem durch die Glasscheibe gebildeten transparenten Substrat 1 befindet sich eine Metalloxidschicht 2 bzw. 4, in der (und zwischen denen) mehrere dünne Metallschichten insbesondere aus Silber verteilt sind, die die Metallschicht 3 des Belages 5′ definieren, woher eine bestimmte Schichtdicke nicht unterschritten sein darf, um noch eine elektrische Leitfähigkeit der Metallschicht 3 zu gewährleisten. Die Metalloxidschichten 2 bzw. 4 weisen eine Dicke von jeweils etwa 26 nm auf, während die Metallschicht 3 eine Dicke von etwa 7 nm hat. Die Reflexion ist bei vorgegebener Metallschichtdicke nahezu konstant gehalten (Fig. 5 (c)); der Energiedurchgang im IR-Wellenlängenbereich ist gering. Die IR-Reflexion dieses Mehrschichtensystems liegt bei einer fest vorgegebenen Silberschicht-Dicke von etwa 10 nm bei etwa 94 %. Wie aus Fig. 5 (c) ersichtlich, hat das System eine Reflexion im sichtbaren Wellenlängenbereich von etwa 2 %. Die beobachtbaren Reflexionsschwankungen betragen bei diesem Wert weniger als 1/4 %. Ist der Sonnenschutzbelag 5′ auf einer der beiden Scheiben einer Isolierverglasung (Fig. 3) angeordnet, so ist das Verhältnis der Reflexion der belaglosen Scheibe 6 zur Reflexion der den Belag 5′ aufweisenden Scheibe 7 in diesem Falle von 1 : 1 auf 4 : 1 erhöht. Die Gesamtreflexion der Isolierverglasung wird somit dominant von der belaglosen Scheibe 6 bestimmt.

Der erfindungsgemäße wärmedämmende Belag 5 wird z.B. dadurch hergestellt, daß die einzelnen Schichten 2, 3, 4 nacheinander durch konventionelle Dioden-Kathoden-Zerstäubung auf dem Substrat 1 aus Glas oder Kunststoff niedergeschlagen werden, wobei die erste und die dritte Schicht, d.h. die Metalloxidschichten 2 und 4 in der gleichen reaktiven Atmosphäre, z.B. in einem Argon-Sauerstoff-Gemisch, und die zweite Schicht, d.h. die Metallschicht 3, in einer Edelgasatmosphäre (z.B. Argon) aufgebracht werden. Der erfindungsgemäße Sonnenschutzbelag 5′ wird dadurch hergestellt, daß die Metallschicht 3 durch mehrfaches Aufsputtern in den Metalloxidschichten 2, 4 verteilt wird.

Figur 3 zeigt schematisch einen Querschnitt durch eine Isolierverglasung, bei der auf eine deren beiden Seiten 6, 7, zum Zwischenraum 8 weisend, der erfindungsgemäße wärmedämmende und/ oder Sonnenschutz-Belag 5 bzw. 5′ aufgebracht ist. Die Isolierverglasung besteht aus zwei parallel zueinander angeordneten Glasscheiben 6, 7, die am Scheibenrand durch einen Abstandshalter 9, der die beiden Scheiben 6, 7 auf einem vorgegebenen Abstand hält, und durch Verklebung, Verlötung oder Glasfritten nach außen dicht verschlossen sind. Der Belag 5 vermindert den Wärmefluß zwischen den beiden Scheiben 6, 7 durch Reduktion des Strahlungsaustausches infolge des niedrigen Emissionsvermögens des Belages 5. Wegen der hohen Transparenz für Sonnenstrahlen hat die mit einem erfindungsgemäßen Belag versehene Scheibe somit Sonnenkollektorwirkung. Andererseits ermöglicht der Sonnenschutz-Belag 5′ eine hohe Reflexion der Strahlung im IR-Wellenlängenbereich.

Figur 4 zeigt eine Ausführungsform, bei der der wärmedämmende Belag und/oder der Sonnenschutz-Belag 5 bzw. 5′ auf eine Kunststoffolie 10 aufgebracht ist. Die Kunststoffolie 10 ist zwischen den beiden Scheiben 6, 7 aufgespannt und in einem nur schematisch dargestellten Abstandhalter 11 verklemmt.

Figur 5 zeigt den Verlauf der Reflexion in Abhängigkeit von der Wellenlänge bei einer herkömmlichen Standardbeschichtung (Kurve a), bei einem erfindungsgemäßen Wärmeschutz-Belag 5 (Kurve b), bzw. bei einem erfindungsgemäßen Sonnenschutz-Belag 5′ (Kurve c). Bei den Zahlenwerten ist zu erwähnen, daß nur Fig. 5a die Reflexion an beiden Grenzflächen (Luft-Glas und Glas-Luft) mit etwa 4 % berücksichtigt, die beiden anderen Kurven jedoch die Reflexion an der zweiten Grenzfläche nicht berücksichtigten. Ferner läßt sich die Grenzfläche bei der ersten Lösung (Fig. 5b) gemäß der Erfindung nahezu vollständig, bei der zweiten Lösung (Fig. 5c) gemäß der Erfindung etwa zur Hälfte entspiegeln.

Wie aus Kurve a ersichtlich, zeigt die Reflexionskurve eine W-Struktur mit einem üblicherweise auftretenden Maximum bei ca. 480 nm und hat einen durchschnittlichen Reflexionswert von 5 bis 6 % im sichtbren Wellenlängenbereich.

Die Kurve b zeigt den extrem flachen Verlauf der Reflexionskurve bei dem erfindungsgemäßen Wärmeschutzbelag 5. Durch diese Charakteristik ist der Energiedurchgang einer mit dem Belag 5 versehenen Scheibe erheblich verbessert. Wegen der Absenkung des Reflexionsanteils ist bei gleichbleibender Absorption der Schichten eine um diesen Anteil höhere Transmission vorhanden.

Durch den erfindungsgemäßen Sonnenschutzbelag 5′ nach Kurve c wurde das oben erwähnte Maximum in zwei Maxima zerlegt und durch Optimierung so unterdrückt, daß die Schwankungen des Reflexionswertes im sichtbaren Spektrum kleiner als 1/4 % bei einem Wert von etwa 2 % betragen. Dies gilt für einen insgesamt Fünfschichten-Aufbau. Eine weitere Verflachung ergibt sich, wenn mehr als 2 Teil-Metallschichten in jeder Metalloxidschicht verteilt werden.

Zur Verbesserung der Korrosionsbeständigkeit ist eine Deckschicht des Belages, bei der es sich um die außenliegende Metalloxidschicht 4 handeln kann, leitend ausgebildet und mit der Metallschicht 3 elektrisch kurzgeschlossen, um so Redoxpotentialunterschiede unwirksam zu machen.

## Patentansprüche

1. Wärmeschutz-Filter mit einem Substrat (1) aus transparentem Material und mit einem Belag (5,5'), wobei der Belag (5,5') ausschließlich besteht aus:
- einer oder mehreren auf das Substrat aufgebrachten ersten Metallverbindungs-Schichten (2) aus jeweils einem Metall-Oxid oder einem Metall-Sulfid oder einem Metall-Nitrid oder einem Metall-Halogenid,
- einer oder mehreren Metallschichten (3) aus Ag, Au, Ni, Cr, Al, Ti, Ta, Pd oder einer Mischung davon, wobei jede Metallschicht eine Dicke hat, die die elektrische Leitfähigkeit jeder Metallschicht gewährleistet, und
- einer oder mehreren den Belag auf der dem Substrat (1) abgewandten Seite abschließenden zweiten Metallverbindungs-Schichten (4), die jeweils aus einem Metall-Oxid oder einem Metall-Sulfid oder einem Metall-Nitrid oder einem Metall-Halogenid bestehen,
dadurch gekennzeichnet, daß
zur Verbesserung des niederreflektierenden, hochtransparenten Strahlungsverhaltens des Filters die eine oder die mehreren ersten oder zweiten Metallverbindungs-Schichten (2;4) einen Brechungsindex von etwa 2,35 aufweisen und die eine oder die mehreren der jeweils anderen Metallverbindungs-Schichten (4;2) einen deutlich geringeren Brechungsindex aufweisen, derart, daß das Filter im Bereich des sichtbaren Lichts Konstante Reflexions werte aufweist.

2. Wärmeschutz-Filter nach Anspruch 1,
dadurch **gekennzeichnet,**
daß der Belag (5') einen geringen Energiedurchgang im Infrarot-Wellenlängenbereich und konstante Reflexionswerte im Zentrum des sichtbaren Wellenlängenbereichs aufweist und
daß der Belag (5') Reflexionsschwankungen im Zentrum des sichtbaren Spektrums von weniger als 1/4% bei einem Wert von 2% (ohne Berücksichtigung der zweiten Grenzfläche) aufweist,
wobei der Belag (5') insgesamt sieben Schichten aufweist, die Summe der Dicken der drei Metallschichten (3) etwa 7 nm und die Summe der vier Schichten aus Metall-Oxid etwa 52 nm beträgt.

3. Wärmeschutz-Filter nach Anspruch 1,
dadurch **gekennzeichnet,**
daß der Belag (5) einen hohen Energiedurchgang im Infrarot-Wellenlängenbereich und konstante Reflexionswerte im Zentrum des sichtbaren Wellenlängenbereichs aufweist und
daß der Belag (5) eine Reflexion im sichtbaren Spektrum von weniger als 1/2% (ohne Berücksichtigung der zweiten Grenzfläche) aufweist,
wobei der Belag (5) insgesamt drei Schichten aufweist, die Dicke der Metallschicht (3) etwa 10 nm beträgt und die Dicken der beiden Schichten aus Metalloxid etwa 31 nm und 50 nm betragen.

4. Wärmeschutz-Filter nach den Ansprüchen 1, oder 3,
dadurch **gekennzeichnet,**
daß die an das Substrat (1) angrenzende Schicht (2) aus Metall-Oxid, Metall-Sulfid, Metall-Nitrid oder Metall-Halogenid eine Dicke von 15 bis 50 nm, insbesondere etwa 26 nm hat.

5. Wärmeschutz-Filter nach den Ansprüchen 1, 3 oder 4,
dadurch **gekennzeichnet,**
daß die Summe der Dicken der Metallschichten (3) bzw. die Dicke der einen Metallschicht eine Dicke von 5 bis unter 200 nm, insbesondere mindestens etwa 7 nm hat.

6. Wärmeschutz-Filter nach den Ansprüchen 1, 3, 4 oder 5,
dadurch **gekennzeichnet,**
daß die dem Substrat (1) abgewandte Schicht aus Metalloxid, Metall-Sulfid, Metall-Nitrid oder Metall-Halogenid eine Dicke von 10 bis 60 nm, insbesondere etwa 25 nm hat.

7. Wärmeschutz-Filter nach einem der Ansprüche 1, oder 2,
dadurch **gekennzeichnet,**
daß die an das Substrat (1) angrenzende Schicht (2) aus Metall-Oxid, Metall-Sulfid, Metall-Nitrid oder Metall-Halogenid eine Dicke von 15 bis 50 nm, insbesondere etwa 31 nm hat.

8. Wärmeschutz-Filter nach den Ansprüchen 1, 2 oder 7,
dadurch **gekennzeichnet,**
daß die Summe der Dicken der Metallschichten (3) bzw. die Dicke der einen Metallschicht (3) eine Dicke von 5 bis unter 200 nm, insbesondere etwa 10 nm hat.

9. Wärmeschutz-Filter nach den Ansprüchen 1, 2, 7 oder 8,
dadurch **gekennzeichnet,**
daß die dem Substrat (1) abgewandte Schicht (4) aus Metall-Oxid, Metall-Sulfid, Metall-Nitrid oder Metall-Halogenid eine Dicke von 10 bis 60 nm, insbesondere etwa 50 nm hat.

10. Verfahren zur Herstellung eines Wärmeschutz-Filters nach einem der Ansprüche 1 bis 9, bei dem
- eine oder mehrere erste Metallverbindungs-Schichten (2) aus jeweils einem Metall-Oxid oder einem Metall-Sulfid oder einem Metall-Nitrid oder einem Metall-Halogenid auf ein transparentes Substat (1) mittels Tauchen, Pyrolyse, CVD-Niederschlag, plasmaunterstützten CVD-Niederschlag, Aufdampfen oder Aufsputtern aufgebracht werden,
- eine oder mehrere Metallschichten (3) aus Ag, Au, Ni, Cr, Al, Ti, Ta, Pd oder einer Mischung davon mittels Tauchen, Pyrolyse, CVD-Niederschlag, plasmaunterstützten CVD-Niederschlag, Aufdampfen oder Aufsputtern aufgebracht werden, wobei jede Metallschicht eine Dicke hat, die die elektrische Leitfähigkeit jeder Metallschicht gewährleistet, und
- eine oder mehrere zweiten Metallverbindungs-Schichten (4), die jeweils aus einem Metall-Oxid oder einem Metall-Sulfid oder einem Metall-Nitrid oder einem Metall-Halogenid bestehen, auf der dem Substrat (1) abgewandten seite mittels Tauchen, Pyrolyse, CVD-Niederschlag, plasmaunterstützten CVD-Niederschlag, Aufdampfen oder Aufsputtern aufgebracht werden,
dadurch gekennzeichnet, daß
zur Verbesserung des niederreflektierenden, hochtransparenten Strahlungsverhaltens des Filters für die eine oder die mehreren ersten oder zweiten Metallverbindungs-Schichten (2;4) ein Brechungsindex von etwa 2,35 gewählt und für die eine oder die mehreren der jeweils anderen Metallverbindungs-Schichten (4;2) ein deutlich geringerer Brechungsindex gewählt wird, derart, daß das Filter im Bereich des sichtbaren Lichts Konstante Reflexions werte aufweist.

11. Wärmeschutz-Isolierverglasung mit zwei in einem Abstand parallel zueinander angeordneten Scheiben (6,7),
dadurch **gekennzeichnet,**
daß eine der Scheiben (7) als Wärmeschutz-Filters nach einem der Ansprüche 1 bis 11 ausgebildet ist, wobei der Belag (5;5') des Wärmeschutz-Filters zum Scheibenzwischenraum (8) weisend angeordnet ist.

12. Wärmeschutz-Isolierverglasung mit zwei in einem Abstand parallel zueinander angeordneten Scheiben (6,7),
dadurch **gekennzeichnet,**
daß zwischen den Scheiben (6,7) ein Wärmeschutz-Filter nach einem der Ansprüche 1 bis 9 angeordnet ist,
wobei das Substrat (1) als transparente Folie (10) ausgeführt und zwischen den Scheiben (6,7) angeordnet ist.

13. Wärmeschutz-Isolierverglasung nach Anspruch 12,
dadurch **gekennzeichnet,**
daß die transparente Folie (10) auf eine der Scheiben (6,7) aufgeklebt ist.

14. Wärmeschutz-Isolierverglasung nach Anspruch 12,
dadurch **gekennzeichnet,**
daß die transparente Folie (10) in dem Zwischenraum (8) zwischen den Scheiben (6,7) aufgespannt ist.

15. Wärmeschutz-Isolierverglasung mit zwei in einem Abstand parallel zueinander angeordneten Scheiben (6,7),
dadurch **gekennzeichnet,**
daß eine der Scheiben (7) als Wärmeschutz-Filters nach Anspruch 3 ausgebildet ist, und daß das Verhältnis der Reflexion des Wärmeschutz-Filters zur Reflexion der anderen Scheibe (6) 1:4 ist.

16. Wärmeschutz-Isolierverglasung mit zwei in einem Abstand parallel zueinander angeordneten Scheiben (6,7),
dadurch **gekennzeichnet,**
daß eine der Scheiben (7) als Wärmeschutz-Filters nach Anspruch 2 ausgebildet ist, und daß das Verhältnis der Reflexion des Wärmeschutz-Filters zur Reflexion der anderen Scheibe (6) 1:16 ist.

17. Wärmeschutz-Filter nach einem der Ansprüche 1 bis 9,
dadurch **gekennzeichnet,**
daß das Substrat (1) aus Glas oder Kunststoff besteht.

## Claims

1. Heat protection filter having a substrate (1) of transparent material and a coating (5,5'), wherein the coating exclusively consists of:
- one or more first layers (2) of metal compound applied to the substrate, the layers being in each case of a metal oxide or a metal sulphide or a metal nitride or a metal halide,
- one or more metal layers (3) of Ag, Au, Ni, Cr, Al, Ti, Ta, Pd or a mixture thereof, wherein each metal layer has a thickness which ensures the electrical conductivity of each metal layer, and
- one or more second layers (4) of metal compound, finishing the coating on the side away from the substrate (1), the layers being in each case of a metal oxide or a metal sulphide or a metal nitride or a metal halide,
characterised in that,
for improving the low-reflection, highly transparent radiation behaviour of the filter, the one or more first or, as the case may be, second layers (2;4) of metal compound have a refractive index of approximately 2.35, and in each case the one or more other layers (4;2) of metal compound have a distinctly lower refractive index, so that the filter has constant reflection values in the region of visible light.

2. Heat filter according to claim 1,
characterised in that
the coating (5') has a low level of energy transmission in the infra-red wavelength range and constant reflection values in the middle of the visible wavelength range, and in that the coating (5') has variations in reflection in the middle of the visible spectrum of less than 1/4% at a value of 2% (without consideration of the second boundary surface),
wherein the coating (5') has a total of seven layers, the sum of the thicknesses of the three metal layers (3) is approximately 7 nm and the sum of the four layers of metal oxide amounts to approximately 52 nm.

3. Heat filter according to claim 1,
characterised in that
the coating (5) has a high level of energy transmission in the infra-red wavelength range and constant reflection values in the middle of the visible wavelength range, and in that the coating (5) has a reflection in the visible spectrum of less than 1/2% (without consideration of the second boundary surface),
wherein the coating (5) has a total of three layers, the thickness of the metal layer (3) amounts to approximately 10 nm and the thicknesses of the two layers of metal oxide amount to approximately 31 nm and 50 nm.

4. Heat filter according to claims 1 or 3,
characterised in that
the layer (2) of metal oxide, metal sulphide, metal nitride or metal halide adjacent to the substrate (1) has a thickness of 15 to 50 nm, in particular approximately 26 nm.

5. Heat filter according to claims 1, 3 or 4,
characterised in that
the sum of the thicknesses of the metal layers (3), or the thickness of the one metal layer, has a thickness of 5 to less than 200 nm, in particular at least approximately 7 nm.

6. Heat filter according to claims 1, 3, 4 or 5,
characterised in that
the layer of metal oxide, metal sulphide, metal nitride or metal halide away from the substrate (1) has a thickness of 10 to 60 nm, in particular approximately 25 nm.

7. Heat filter according to one of claims 1 or 2,
characterised in that
the layer (2) of metal oxide, metal sulphide, metal nitride or metal halide adjacent to the substrate (1) has a thickness of 15 to 50 nm, in particular approximately 31 nm.

8. Heat filter according to claims 1, 2 or 7,
characterised in that
the sum of the thicknesses of the metal layers (3), or the thickness of the one metal layer (3), has a thickness of 5 to less than 200 nm, in particular approximately 10 nm.

9. Heat filter according to claims 1, 2, 7 or 8,
characterised in that
the layer (4) of metal oxide, metal sulphide, metal nitride or metal halide away from the substrate (1) has a thickness of 10 to 60 nm, in particularly approximately 50 nm.

10. Method for the production of a heat filter according to one of claims 1 to 9, in which:
- one or more first layers (2) of metal compound, in each case of a metal oxide or a metal sulphide or a metal nitride or a metal halide, are applied to a transparent substrate (1) by means of dipping, pyrolysis, CVD deposition, plasma assisted CVD deposition, vapour deposition or sputter deposition,
- one or more metal layers (3) of Ag, Au, Ni, Cr, Al, Ti, Ta, Pd or a mixture thereof are applied by means of dipping, pyrolysis, CVD deposition, plasma assisted CVD deposition, vapour deposition or sputter deposition, wherein each metal layer has a thickness which ensures the electrical conductivity of each metal layer, and
- one or more second layers (4) of metal compound, in each case of a metal oxide or a metal sulphide or a metal nitride or a metal halide, are applied to the side away from the substrate (1) by means of dipping, pyrolysis, CVD deposition, plasma assisted CVD deposition, vapour deposition or sputter deposition,
characterised in that
for improving the low-reflection, highly transparent radiation behaviour of the filter, a refractive index of approximately 2.35 is selected for the one or more first or, as the case may be, second layers (2;4) of metal compound, and a distinctly lower refractive index is selected in each case for the one or more other layers (4;2) of metal compound, so that the filter has constant reflection values in the range of visible light.

11. Heat insulating glazing having two plates (6,7) arranged spaced apart and parallel with one another,
characterised in that
one of the plates (7) is formed as a heat filter according to one of claims 1 to 11, wherein the coating (5;5') of the heat filter is arranged directed towards the plate interspace (8).

12. Heat insulating glazing having two plates (6,7) arranged spaced apart and parallel with one another,
characterised in that
a heat filter according to one of claims 1 to 9 is arranged between the plates (6,7),
wherein the substrate (1) is formed as a transparent foil (10) and is arranged between the plates (6,7).

13. Heat insulating glazing according to claim 12,
characterised in that
the transparent foil (10) is adhered to one of the plates (6,7).

14. Heat insulating glazing according to claim 12,
characterised in that
the transparent foil (10) is stretched out in the interspace (8) between the plates (6,7).

15. Heat insulating glazing having two plates (6,7) arranged spaced apart and parallel with one another,
characterised in that
one of the plates (7) is formed as a heat filter according to claim 3, and in the ratio of the reflection of the heat filter to the reflection of the other plate (6) is 1:4.

16. Heat insulating glazing having two plates (6,7) arranged spaced apart and parallel with one another,
characterised in that
one of the plates (7) is formed as a heat filter according to claim 2, and in that the ratio of the reflection of the heat filter to the reflection of the other plate (6) is 1:16.

17. Heat filter according to one of claims 1 to 9,
characterised in that
the substrate (1) is of glass or plastics.

## Revendications

1. Filtre de protection thermique avec un substrat (1) en matériau transparent et avec un revêtement (5, 5'), dans lequel le revêtement (5, 5') se compose exclusivement :
- d'une ou plusieurs premières couches (2) de composés métalliques appliquées sur le substrat, constituées chacune d'un oxyde métallique ou d'un sulfure métallique ou d'un nitrure métallique ou d'un halogénure métallique,
- d'une ou plusieurs couches (3) de métal en Ag, Au, Ni, Cr, Al, Ti, Ta, Pd ou d'un de leurs mélanges, chaque couche de métal ayant une épaisseur qui assure la conductivité électrique de chaque couche métallique, et
- d'une ou plusieurs deuxièmes couches (4) de composés métalliques terminant le revêtement sur la face opposée au substrat (1), constituées chacune d'un oxyde métallique ou d'un sulfure métallique ou d'un nitrure métallique ou d'un halogénure métallique,
**caractérisé** en ce que, pour améliorer le comportement peu réfléchissant et très transparent du filtre à l'égard du rayonnement, la première ou la deuxième ou les plusieurs premières ou deuxièmes couches (2; 4) de composés métalliques présentent un indice de réfraction d'environ 2,35 et l'une ou les autres couches respectives (4; 2) de composés métalliques présente ou présentent un indice de réfraction nettement moindre, de telle sorte que le filtre présente dans le domaine de la lumière visible des valeurs de réflexion constantes.

2. Filtre de protection thermique selon la revendication 1, caractérisé en ce que le revêtement (5') présente un faible passage d'énergie dans le domaine des longueurs d'ondes infrarouges et des valeurs de réflexion constantes au centre du domaine des longueurs d'ondes visibles et en ce que le revêtement (5') présente des fluctuations de réflexion au centre du spectre visible inférieures à 0,25% pour une valeur de 2% (sans tenir compte de la deuxième surface limite), le revêtement (5') présentant au total sept couches, la somme des épaisseurs des trois couches de métal (3) étant d'environ 7nm et la somme des quatre couches en oxyde métallique étant d'environ 52nm.

3. Filtre de protection thermique selon la revendication 1, caractérisé en ce que le revêtement 5 présente un grand passage d'énergie dans le domaine des longueurs d'ondes infrarouges et des valeurs de réflexion constantes au centre du domaine des longueurs d'ondes visibles, et en ce que le revêtement (5) présente une réflexion dans le spectre visible inférieure à 0,5% (sans tenir compte de la deuxième surface limite), le revêtement (5) présentant au total trois couches, l'épaisseur de la couche de métal (3) étant d'environ 10nm et les épaisseurs des deux couches d'oxyde métallique étant d'environ 31nm et 50nm.

4. Filtre de protection thermique selon les revendications 1 ou 3, caractérisé en ce que la couche (2) adjacente au substrat (1), composée d'oxyde métallique, de sulfure métallique, de nitrure métallique ou d'halogénure métallique a une épaisseur de 15 à 50nm, en particulier d'environ 26nm.

5. Filtre de protection thermique selon les revendications 1, 3 ou 4, caractérisé en ce que la somme des épaisseurs des couches de métal (3) ou l'épaisseur de la couche de métal unique a une épaisseur allant de 5nm à moins de 200nm, en particulier d'au moins environ 7nm.

6. Filtre de protection thermique selon les revendications 1, 3, 4 ou 5, caractérisé en ce que la couche éloignée du substrat (1), composée d'oxyde métallique, de sulfure métallique, de nitrure métallique ou d'halogénure métallique a une épaisseur de 10 à 60nm, en particulier d'environ 25nm.

7. Filtre de protection thermique selon une des revendications 1 ou 2, caractérisé en ce que la couche (2) adjacente au substrat (1), composée d'oxyde métallique, de sulfure métallique, de nitrure métallique ou d'halogénure métallique a une épaisseur de 15 à 50nm, en particulier d'environ 31nm.

8. Filtre de protection thermique selon les revendications 1, 2 ou 7, caractérisé en ce que la somme des épaisseurs des couches de métal (3) ou l'épaisseur de la couche de métal (3) unique a une épaisseur allant de 5nm à moins de 200nm, en particulier d'environ 10nm.

9. Filtre de protection thermique selon les revendications 1, 2, 7 ou 8, caractérisé en ce que la couche (4) éloignée du substrat (1), composée d'oxyde métallique, de sulfure métallique, de nitrure métallique ou d'halogénure métallique a une épaisseur de 10 à 60nm, en particulier d'environ 50nm.

10. Procédé de fabrication d'un filtre de protection thermique selon une des revendications 1 à 9 dans lequel :
- une ou plusieurs première(s) couches (2) de composés métalliques, constituées d'un oxyde métallique ou d'un sulfure métallique ou d'un nitrure métallique ou d'un halogénure métallique, sont déposées sur un substrat transparent (1) par immersion, pyrolyse, dépôt CVD (= dépôt chimique vapeur), dépôt CVD assisté par plasma, dépôt par vaporisation ou pulvérisation,
- une ou plusieurs couches de métal (3) en Ag, Au, Ni, Cr, Al, Ti, Ta, Pd ou un de leurs mélanges sont déposées par trempage, pyrolyse, dépôt CVD, dépôt CVD assisté par plasma, dépôt par vaporisation ou pulvérisation, chaque couche de métal ayant une épaisseur qui assure la conductivité électrique de chaque couche de métal, et
- une ou plusieurs deuxièmes couches (4) de composés métalliques, constituées d'un oxyde métallique ou d'un sulfure métallique ou d'un nitrure métallique ou d'un halogénure métallique, sont déposées sur le côté éloigné du substrat (1) par trempage, pyrolyse, dépôt CVD, dépôt CVD assisté par plasma, dépôt par vaporisation ou pulvérisation,
**caractérisé** en ce que, pour améliorer le comportement peu réfléchisant, très transparent, du filtre à l'égard du rayonnement, on choisit pour la ou les premières ou deuxièmes plusieurs couches (2; 4) de composés métalliques un indice de réfraction d'environ 2,35 et pour la ou les plusieurs autres couches (4; 2) de composés métalliques un indice de réfraction nettement moindre, de telle sorte que le filtre présente dans le domaine de la lumière visible des valeurs de réflexion constantes.

11. Vitrage isolant protecteur thermique avec deux vitres (6, 7) disposées à distance l'une de l'autre, parallèlement l'une à l'autre, **caractérisé** en ce qu'une des vitres (7) est formée en tant que filtre de protection thermique selon une des revendications 1 à 9, le revêtement (5; 5') du filtre de protection thermique étant disposé face à l'espace intermédiaire (8) entre les vitres.

12. Vitrage isolant protecteur thermique avec deux vitres (6, 7) disposées à distance l'une de l'autre, parallèlement l'une à l'autre, caractérisé en ce qu'un filtre de protection thermique selon une des revendications 1 à 9 est disposé entre les vitres (6, 7), le substrat (1) étant réalisé sous la forme d'un film transparent (10) et est disposé entre les vitres (6, 7).

13. Vitrage isolant protecteur thermique selon la revendication 12, caractérisé en ce que le film transparent (10) est collé sur une des vitres (6, 7).

14. Vitrage isolant protecteur thermique selon la revendication 12, caractérisé en ce que le film transparent (10) est tendu dans l'espace intermédiaire (8) entre les vitres (6, 7).

15. Vitrage isolant protecteur thermique avec deux vitres (6, 7) disposées parallèlement l'une à l'autre et espacées entre elles, caractérisé en ce qu'une vitre (7) constitue le filtre protecteur thermique selon la revendication 3 et en ce que le rapport entre la réflexion du filtre protecteur thermique et la réflexion de l'autre vitre (6) est de 1 : 4.

16. Vitrage isolant protecteur thermique avec deux vitres (6, 7) disposées parallèlement l'une à l'autre et espacées entre elles, caractérisé en ce qu'une des vitres (7) constitue le filtre protecteur thermique selon la revendication 2, et en ce que le rapport entre la réflexion du filtre protecteur thermique et la réflexion de l'autre vitre (6) est de 1 : 16.

17. Filtre de protection thermique selon une des revendications 1 à 9, caractérisé en ce que le substrat (1) est en verre ou en matière plastique.
